# FASCICULE DE BREVET EUROPEEN

(11) **EP 3 956 615 B1**
(45) Date de publication et mention de la délivrance du brevet: **02.08.2023**
(21) Numéro de dépôt: 20713908.0
(22) Date de dépôt: 30.03.2020
(51) Int. Cl.: F25B 49/02, F25B 5/04, F25B 6/04

(54) **PROCEDE DE CONTROLE D'UN DISPOSITIF DE GESTION THERMIQUE D'UN VEHICULE AUTOMOBILE**
VERFAHREN ZUR STEUERUNG EINES THERMISCHEN MANAGEMENTGERÄTS EINES KRAFTFAHRZEUGS
METHOD FOR CONTROLLING A THERMAL MANAGEMENT DEVICE OF A MOTOR VEHICLE

(30) Priorité: 17.04.2019 FR 1904091
(43) Date de publication de la demande: 23.02.2022
(73) Titulaire: VALEO SYSTEMES THERMIQUES, 78320 Le Mesnil Saint-Denis (FR)
(72) Inventeur: BENOUALI, Jugurtha, 78322 LE MESNIL SAINT-DENIS CEDEX (FR); BEAUVIS, Régis, 78322 LE MESNIL SAINT-DENIS CEDEX (FR); LIU, Jin-Ming, 78322 LE MESNIL SAINT-DENIS CEDEX (FR)
(74) Mandataire: Valeo Systèmes Thermiques
(86) Numéro de dépôt international: PCT/EP2020/059010
(87) Numéro de publication internationale: WO 2020/212127

(56) Documents cités:
- EP-A1- 3 031 641
- FR-A1- 2 983 285
- FR-A1- 3 026 478

## Description

L'invention se rapporte au domaine des véhicules automobiles électriques et hybrides et plus particulièrement à un procédé de gestion d'un dispositif de chauffage à pompe à chaleur pour un tel véhicule automobile.

Dans le domaine des véhicules électriques et hybrides où il est difficile de concilier une bonne autonomie des batteries et un chauffage efficace de l'habitacle, il est connu d'utiliser un dispositif de gestion thermique comportant un circuit de fluide réfrigérant à l'intérieur duquel circule un fluide réfrigérant et pouvant fonctionner selon un mode pompe à chaleur. Un tel dispositif de gestion thermique est particulièrement utile au démarrage, lorsque le moteur thermique des véhicules hybrides est froid ou alors pour les véhicules électriques qui n'ont pas de moteur thermique sur lequel récupérer de la chaleur. Le circuit de fluide réfrigérant comprend successivement dans le sens de circulation du fluide réfrigérant un compresseur, un condenseur destiné réchauffer un flux interne d'air allant vers l'habitacle, un dispositif de détente et un évaporateur destiné à prélever de la chaleur au niveau de l'air extérieur. Par exemple, document EP3031641 A1 dévoile un procédé de contrôle d'un dispositif de gestion thermique d'un véhicule automobile, ledit dispositif de gestion thermique comportant un circuit de fluide réfrigérant dans lequel est destiné à circuler un premier fluide caloporteur et configuré pour fonctionner dans un mode pompe à chaleur, ledit circuit de fluide réfrigérant comportant dans le sens de circulation du fluide réfrigérant en mode pompe à chaleur: un compresseur, un premier échangeur de chaleur destiné à échanger de l'énergie calorifique directement ou indirectement avec un flux d'air interne, un dispositif de détente, un deuxième échangeur de chaleur destiné à être traversé par un flux d'air externe, ledit dispositif de gestion thermique comportant en outre un dispositif de chauffage électrique destiné à réchauffer directement ou indirectement le flux d'air interne. Le document EP3031641 A1 dévoile deux modes de chauffage. Le chauffage électrique n'est utilisé qu'en complément de la chaleur apportée par la pompe à chaleur.

Cependant, ces dispositifs de gestion thermique peuvent être long à chauffer et donc mettre un certain temps avant d'atteindre une température de consigne déterminée par l'utilisateur.

Afin de diminuer ce temps pour atteindre la température consigne, il est connu d'ajouter au sein du dispositif de gestion thermique un dispositif de chauffage électrique. Néanmoins, selon les procédés de contrôle du dispositif de gestion thermique, le temps pour atteindre la température consigne peut être toujours assez long. De plus des problèmes de givrage au niveau de l'évaporateur notamment lorsque la température extérieure est inférieure ou égale à 5°C peuvent diminuer l'efficacité du dispositif de gestion thermique.

Un des buts de la présente invention est de remédier au moins partiellement aux inconvénients de l'art antérieur et de proposer un procédé de contrôle d'un dispositif de gestion thermique comportant un dispositif de chauffage électrique amélioré.

La présente invention concerne donc un procédé de contrôle d'un dispositif de gestion thermique d'un véhicule automobile, ledit dispositif de gestion thermique comportant un circuit de fluide réfrigérant dans lequel est destiné à circuler un premier fluide caloporteur et configuré pour fonctionner dans un mode pompe à chaleur, ledit circuit de fluide réfrigérant comportant dans le sens de circulation du fluide réfrigérant en mode pompe à chaleur :
a. - un compresseur,
b. - un premier échangeur de chaleur destiné à échanger de l'énergie calorifique directement ou indirectement avec un flux d'air interne,
c. - un dispositif de détente,
d. - un deuxième échangeur de chaleur destiné à être traversé par un flux d'air externe,
e. ledit dispositif de gestion thermique comportant en outre un dispositif de chauffage électrique destiné à réchauffer directement ou indirectement le flux d'air interne,
f. ledit procédé de contrôle comportant lors d'un démarrage du dispositif de gestion thermique à froid les étapes suivantes :
   i. - chauffage direct ou indirect du flux d'air interne uniquement par le dispositif de chauffage électrique jusqu'à ce que ledit flux d'air interne atteigne une température cible inférieure à une température de confort déterminée par rapport à une demande d'un utilisateur, et/ou jusqu'à l'écoulement d'une minuterie prédéterminée,
   ii. - lorsque le flux d'air interne a atteint sa température cible et/ou que la minuterie est écoulée, mise en route du compresseur afin que le circuit de fluide réfrigérant prélève de l'énergie calorifique au niveau du flux d'air externe au niveau du deuxième échangeur de chaleur et relâche ladite énergie calorifique au niveau du premier échangeur de chaleur de sorte que le flux d'air interne atteigne la température de confort.

Ainsi l'invention concerne un procédé de contrôle pour un dispositif de gestion thermique fonctionnant comme une pompe à chaleur indirecte, c'est-à-dire un dispositif où l'eau est préchauffée par un réchauffeur électrique avant que la pompe à chaleur ne soit enclenchée, ceci ayant pour avantage de réduire le givrage de l'échangeur extérieur, et une atteinte plus rapide du confort, puis de couper l'alimentation, ou éteindre, complètement le réchauffeur électrique pour réduire la consommation.

Selon un aspect de l'invention, lorsque le flux d'air interne a atteint sa température de confort, la puissance électrique envoyée au dispositif de chauffage électrique est réduite et la vitesse de rotation du compresseur est maintenue ou augmentée de sorte à maintenir le flux d'air interne au niveau de sa température de confort.

Selon un autre aspect de l'invention, la température cible à atteindre du flux d'air interne est inférieure de 10°C à la température de confort.

Selon un autre aspect de l'invention, la minuterie est comprise entre 1 et 3 minutes, de préférence 2 minutes.

Selon un autre aspect de l'invention, pour une température extérieure inférieure à -20°C, la puissance électrique envoyée au dispositif de chauffage électrique lors de la première étape de chauffage direct ou indirect du flux d'air interne uniquement par ledit dispositif de chauffage électrique est supérieure à 5 kW.

Selon un autre aspect de l'invention, pour une température extérieure comprise entre -20°C et -10°C, la puissance électrique envoyée au dispositif de chauffage électrique, lors de la première étape de chauffage direct ou indirect du flux d'air interne uniquement par ledit dispositif de chauffage électrique, est comprise entre 5 et 3 kW.

Selon un autre aspect de l'invention, pour une température extérieure comprise entre -10°C et 0°C, la puissance électrique envoyée au dispositif de chauffage électrique, lors de la première étape de chauffage direct ou indirect du flux d'air interne uniquement par ledit dispositif de chauffage électrique, est comprise entre 3 et 1 kW.

Selon un autre aspect de l'invention, pour une température extérieure supérieure à 0°C, la puissance électrique envoyée au dispositif de chauffage électrique, lors de la première étape de chauffage direct ou indirect du flux d'air interne uniquement par le dispositif de chauffage électrique, est inférieure à 1 kW.

D'autres caractéristiques, détails et avantages de l'invention ressortiront plus clairement à la lecture de la description donnée ci-après à titre indicatif en relation avec des dessins.
La [Fig.1] montre une représentation schématique d'un dispositif de gestion thermique selon un premier mode de réalisation.
La [Fig.2] montre une représentation schématique d'un dispositif de gestion thermique selon un deuxième mode de réalisation.
La [Fig.3] montre une représentation schématique d'un dispositif de gestion thermique selon un troisième mode de réalisation.
La [Fig.4] montre une représentation schématique d'un dispositif de gestion thermique selon un quatrième mode de réalisation.
La [Fig.5] montre une représentation schématique d'un dispositif de gestion thermique selon un cinquième mode de réalisation.
La [Fig.6] montre une représentation schématique d'un dispositif de gestion thermique selon un sixième mode de réalisation.
La [Fig.7] montre un diagramme de l'évolution de la température d'un flux d'air interne en fonction du temps selon différents procédés de contrôle d'un dispositif de gestion thermique.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

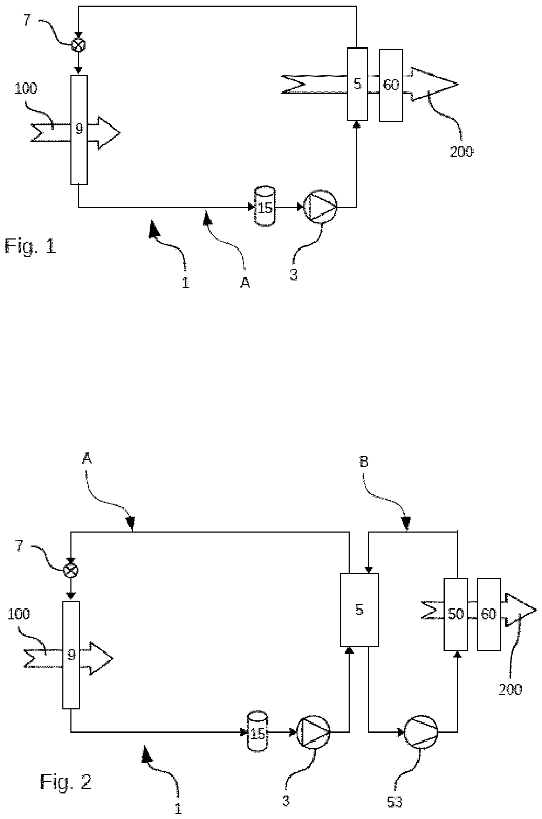

La figure 1 montre une représentation d'un dispositif de gestion thermique 1, notamment pour véhicule électrique ou hybride. Le dispositif de gestion thermique 1 illustré à la figure 1 est le dispositif le plus simple possible et comporte les éléments nécessaires au fonctionnement d'une pompe à chaleur. Le dispositif de gestion thermique 1 comprend ainsi une boucle de circulation de fluide réfrigérant A dans laquelle un fluide réfrigérant est apte à circuler. Cette boucle de circulation de fluide réfrigérant A comporte, dans le sens de circulation du fluide réfrigérant :
- un compresseur 3,
- un premier échangeur de chaleur 5 destiné à échanger de l'énergie calorifique directement ou indirectement avec un flux d'air interne 200,
- un premier dispositif de détente 7, et
- un deuxième échangeur de chaleur 9 destiné à être traversé par un flux d'air extérieur 100.

Par flux d'air interne 200, on entend un flux d'air traversant notamment un dispositif de chauffage, ventilation et/ou climatisation (non représenté) et à destination de l'habitacle du véhicule automobile. Afin de créer le flux d'air intérieur 200, le dispositif de chauffage, ventilation et/ou climatisation peut notamment comporter un ventilateur (non représenté). Par flux d'air externe 100, on entend un flux d'air externe au véhicule automobile traversant le deuxième échangeur de chaleur 9 notamment disposé en face avant du véhicule automobile.

Le dispositif de gestion thermique 1 comporte en outre un dispositif de chauffage électrique 60 destiné à réchauffer directement ou indirectement le flux d'air interne 200.

Selon un premier mode de réalisation illustré à la figure 1, le premier échangeur de chaleur 5 peut être un condenseur destiné à être traversé par un flux d'air interne 200 à destination de l'habitacle du véhicule automobile. Pour cela, le premier échangeur de chaleur 5 peut plus particulièrement être disposé au sein du dispositif de chauffage, ventilation et/ou climatisation.

Selon ce premier mode de réalisation, le premier échangeur de chaleur 5 peut ainsi échanger directement de l'énergie calorifique avec le flux d'air interne 200. Cette énergie calorifique est récupérée dans le flux d'air externe 100 au niveau du deuxième échangeur de chaleur 9 également appelé évaporateur. Ce premier mode de réalisation est également appelé pompe à chaleur directe.

Le dispositif de chauffage électrique 60 est quant à lui disposé dans le flux d'air interne 200, notamment dans le dispositif de chauffage, ventilation et/ou climatisation. Le dispositif de chauffage électrique 60 peut ainsi réchauffer directement le flux d'air interne 200. Le dispositif de chauffage électrique 60 peut notamment être disposé en aval du premier échangeur de chaleur 5 dans le sens de circulation du flux d'air interne 200. Le dispositif de chauffage électrique 60 peut par exemple être un chauffage à haute tension comportant une ou plusieurs thermistances à coefficient en température positif (connues également sous l'acronyme CTP).

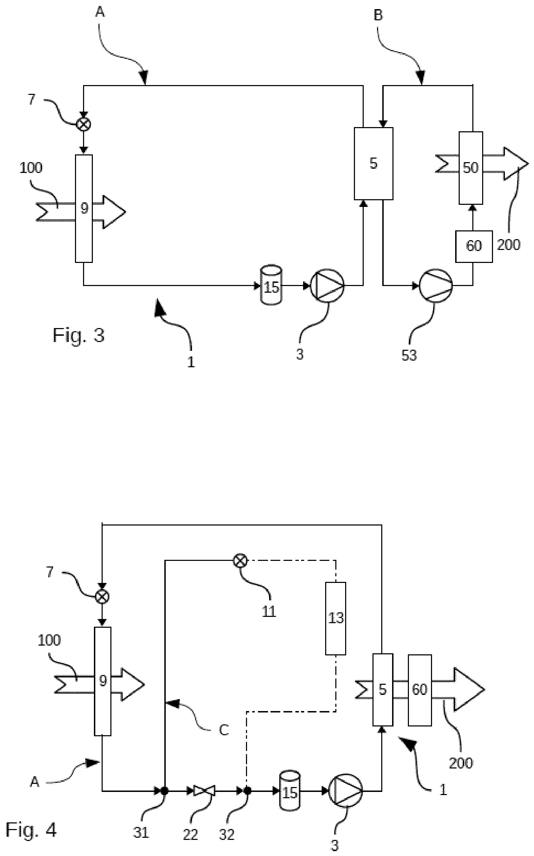

Selon un deuxième mode de réalisation illustré aux figures 2 et 3, le premier échangeur de chaleur 5 peut être un échangeur de chaleur bi-fluide destiné à être traversé conjointement par le fluide réfrigérant de la boucle de circulation de fluide réfrigérant A et un fluide caloporteur d'une boucle de circulation de fluide caloporteur B. Cette boucle de circulation de fluide caloporteur B comporte notamment une pompe 53 et un troisième échangeur de chaleur 50 destiné à être traversé par le flux d'air interne 200. Pour cela, le troisième échangeur de chaleur 50 peut plus particulièrement être disposé au sein d'un dispositif de chauffage, ventilation et/ou climatisation (non représenté).

Selon ce deuxième mode de réalisation, le premier échangeur de chaleur 5 peut ainsi échanger indirectement de l'énergie calorifique avec le flux d'air interne 200 via la boucle de circulation de fluide caloporteur B et son troisième échangeur de chaleur 50. Cette énergie calorifique est récupérée dans le flux d'air externe 100 au niveau du deuxième échangeur de chaleur 9 également appelé évaporateur. Du fait de la présence de cette boucle de circulation de fluide caloporteur B, ce deuxième mode de réalisation est également appelé pompe à chaleur indirecte.

Selon une première variante de ce deuxième mode de réalisation illustrée à la figure 2, le dispositif de chauffage électrique 60 est disposé dans le flux d'air interne 200, notamment dans le dispositif de chauffage, ventilation et/ou climatisation. Le dispositif de chauffage électrique 60 peut ainsi réchauffer directement le flux d'air interne 200. Le dispositif de chauffage électrique 60 peut notamment être disposé en aval du troisième échangeur de chaleur 50 dans le sens de circulation du flux d'air interne 200.

Selon une deuxième variante de ce deuxième mode de réalisation illustrée à la figure 3, le dispositif de chauffage électrique 60 est disposé dans la boucle de circulation de fluide caloporteur B. Le dispositif de chauffage électrique 60 peut ainsi réchauffer indirectement le flux d'air interne 200 en réchauffant le fluide caloporteur de la boucle de circulation de fluide caloporteur B. Le dispositif de chauffage électrique 60 peut notamment être disposé dans le sens de circulation du fluide caloporteur en amont du troisième échangeur de chaleur 50.

Sur les figures 1 à 3, le sens de circulation du fluide réfrigérant est illustré par des flèches.

Pour ces premier et deuxième modes de réalisation, le premier dispositif de détente 7 peut être par exemple un dispositif de détente dont l'ouverture est pilotable afin de contrôler la pression du fluide réfrigérant à sa sortie ou alors un orifice tube calibré pour obtenir une pression définie à sa sortie.

Les représentations des figures 1 à 3 ne sont que des exemples d'architecture d'un dispositif de pompe à chaleur. D'autres architectures plus ou moins complexes sont tout à fait envisageables et peuvent rentrer dans le cadre de l'invention.

La boucle de circulation de fluide réfrigérant A peut également comporter un dispositif de séparation de phase 15, comme par exemple une bouteille dessiccante, disposé en amont du compresseur 3, entre le deuxième échangeur de chaleur 9 et ledit compresseur 3.

Comme le montre le premier et deuxième mode de réalisation du dispositif de gestion thermique 1, ce dernier peut être uniquement dédié à fonctionner en mode pompe à chaleur, c'est-à-dire à réchauffer le flux d'air interne 200 en prélevant de l'énergie calorifique dans le flux d'air externe 200.

Cependant, il est également possible que le dispositif de gestion thermique 1 soit un dispositif de climatisation inversible comme par exemple illustré aux figures 4 à 6. Dans ce cas de figure, le dispositif de gestion thermique 1 est configuré pour fonctionner selon différents modes comme par exemple :
- un mode de refroidissement dans lequel le dispositif de gestion thermique 1 refroidit le flux d'air interne 200 et relâche de l'énergie calorifique dans le flux d'air externe 100,
- un mode pompe à chaleur dans lequel le dispositif de gestion thermique 1 réchauffe le flux d'air interne 200 en prélevant de l'énergie calorifique dans le flux d'air externe 100,
- un mode de déshumidification dans lequel le dispositif de gestion thermique 1 refroidit dans un premier temps le flux d'air interne 200 et ensuite le réchauffe dans un deuxième temps.

Les représentations des figures 4 à 6 ne sont que des exemples d'architecture d'un dispositif de climatisation inversible. D'autres architectures plus ou moins complexes sont tout à fait envisageables et peuvent rentrer dans le cadre de l'invention.

A l'instar des modes de réalisation des figures 1 à 3, le dispositif de gestion thermique 1 comporte toujours une boucle de circulation de fluide réfrigérant A comportant un compresseur 3, un premier échangeur de chaleur 5, un premier dispositif de détente 7 et un deuxième échangeur de chaleur 9.

La figure 4 montre un cas similaire à la figure 1 dans lequel le premier échangeur de chaleur 5 et le dispositif de chauffage électrique 60 peuvent échanger directement de l'énergie calorifique avec le flux d'air interne 200.

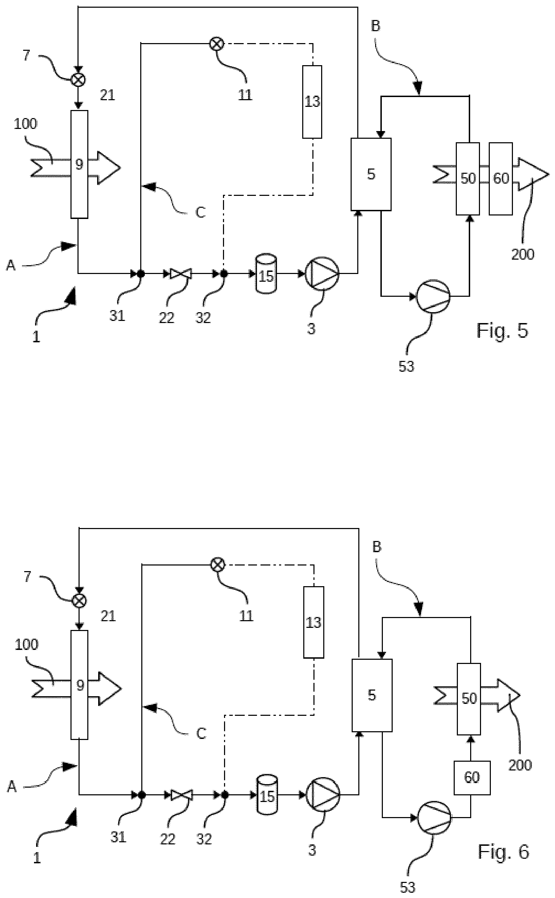

La figure 5 montre un cas similaire à la figure 2 dans lequel le premier échangeur de chaleur 5 peut échanger indirectement avec le flux d'air interne 200 via la boucle de circulation de fluide caloporteur B et le troisième échangeur de chaleur 50. Le dispositif de chauffage électrique 60 peut quant à lui échanger directement de l'énergie calorifique avec le flux d'air interne 200.

La figure 6 montre un cas similaire à la figure 3 dans lequel le premier échangeur de chaleur 5 peut échanger indirectement avec le flux d'air interne 200 via la boucle de circulation de fluide caloporteur B et le troisième échangeur de chaleur 50. Le dispositif de chauffage électrique 60 peut quant à lui échanger indirectement de l'énergie calorifique avec le flux d'air interne 200 en réchauffant le fluide caloporteur de la boucle de circulation de fluide caloporteur B.

Toujours comme illustré aux figures 4 à 6, le dispositif de gestion thermique 1 comporte en outre une conduite de dérivation C reliant un premier point de jonction 31 à un deuxième point de jonction 32. Le premier point de jonction 31 est disposé en aval du deuxième échangeur de chaleur 9 entre ledit deuxième échangeur de chaleur 9 et le compresseur 3. Le deuxième point de jonction 32 est quant à lui disposé en aval du premier point de jonction 31, entre ledit premier point de jonction 31 et le compresseur 3.

La conduite de dérivation C comporte un deuxième dispositif de détente 11 disposé en amont d'un quatrième échangeur de chaleur 13. Ce quatrième échangeur de chaleur 13 également appelé évaporateur interne est notamment destiné à être traversé par le flux d'air interne 200. Le quatrième échangeur de chaleur 13 peut plus particulièrement être disposé au sein du dispositif de chauffage, ventilation et/ou climatisation (non représenté), notamment en amont du premier échangeur de chaleur 5 ou du troisième échangeur de chaleur 50 dans le sens de circulation du flux d'air interne 200.

Afin de permettre ou non le passage du fluide réfrigérant dans la conduite de dérivation, une vanne d'arrêt 22 peut être disposée entre le premier 31 et le deuxième point de jonction 32. Le deuxième dispositif de détente 11 peut quant à lui comporter une fonction d'arrêt, c'est-à-dire qu'il est apte à bloquer le flux de fluide réfrigérant dans la conduite de dérivation C lorsqu'il est complètement fermé.

Cette conduite de dérivation C est utilisée en mode climatisation ou en mode de déshumidification afin de refroidir le flux d'air interne 200 via le quatrième échangeur de chaleur 13.

Sur les figures 4 à 6 est représenté uniquement le mode de fonctionnement en mode pompe à chaleur. Le sens de circulation du fluide réfrigérant est représenté par des flèches. La vanne d'arrêt 22 est ainsi ouverte et le deuxième dispositif de détente 11 est fermé de sorte que le fluide réfrigérant ne circule pas dans le quatrième échangeur de chaleur 13.

La présente invention concerne un procédé de contrôle d'un dispositif de gestion thermique 1 tel que décrit précédemment lors d'un démarrage à froid. Ce procédé de gestion est plus particulièrement mis en oeuvre par une unité de commande électronique embarquée dans le véhicule automobile.

Le procédé de contrôle comporte ainsi lors d'un démarrage du dispositif de gestion thermique 1 à froid les étapes suivantes :
- chauffage direct ou indirect du flux d'air interne 200 uniquement par le dispositif de chauffage électrique 60 jusqu'à ce que ledit flux d'air interne 200 atteigne une température cible inférieure à une température de confort déterminée par rapport à une demande d'un utilisateur, et/ou jusqu'à l'écoulement une minuterie prédéterminée,
- lorsque le flux d'air interne 200 a atteint sa température cible et/ou que la minuterie est écoulée, mise en route du compresseur 3 afin que le circuit de fluide réfrigérant prélève de l'énergie calorifique au niveau du flux d'air externe 100 au niveau du deuxième échangeur de chaleur 9 et relâche ladite énergie calorifique au niveau du premier échangeur de chaleur 5 de sorte que le flux d'air interne 200 atteigne la température nécessaire pour assurer un niveau de confort.

La température de confort correspond à la température du flux d'air interne 200 déterminée afin de chauffer l'habitacle du véhicule automobile et afin d'atteindre la température souhaitée et programmée par l'utilisateur. La température cible à atteindre par le flux d'air interne 200 peut notamment être une température inférieure de 0°C jusqu'à 30°C, préférentiellement inférieure de 5°C jusqu'à 15°C, à la température de consigne envoyée par le contrôleur de confort

La température de confort correspond à la température du flux d'air interne 200 déterminée afin de chauffer l'habitacle du véhicule automobile et afin d'atteindre la température souhaitée et programmée par l'utilisateur. La température cible à atteindre du flux d'air interne 200 peut notamment être une température inférieure de 10°C jusqu'à 30°C à la température de confort. Le choix de cette température dépend à la fois de la température extérieure, du niveau du flux d'air et du mode de réalisation du chauffage, notamment un chauffage électrique direct ou indirect. Par exemple, la température cible peut être comprise entre 35°C et 50°C, de préférence entre 40°C et 45°C.

Par exemple, la température cible peut être comprise entre 10 et 70°C, de préférence entre 35 et 50°C.

La minuterie peut quant à elle être comprise entre 1 et 3 minutes, de préférence 2 minutes.

Selon la température extérieure, la puissance électrique envoyée au dispositif de chauffage électrique 60 lors de la première étape de chauffage direct ou indirect du flux d'air interne 200 uniquement par ledit dispositif de chauffage électrique 60, peut varier. En effet, plus la température extérieure est basse, plus il est nécessaire d'envoyer une puissance électrique importante pour réchauffer rapidement le flux d'air interne 200.

Ainsi, pour une température extérieure inférieure à -20°C, la puissance électrique envoyée au dispositif de chauffage électrique 60 peut être supérieure à 5 kW.

Pour une température extérieure comprise entre -20°C et -10°C, la puissance électrique envoyée au dispositif de chauffage électrique 60 peut être comprise entre 5 et 3 kW.

Pour une température extérieure comprise entre -10°C et 0°C, la puissance électrique envoyée au dispositif de chauffage électrique 60 peut être comprise entre 3 et 1 kW.

Enfin, pour une température extérieure supérieure à 0°C, la puissance électrique envoyée au dispositif de chauffage électrique 60 peut être inférieure à 1 kW.

Cette variation de la puissance électrique envoyée au dispositif de chauffage électrique 60 permet d'adapter la consommation électrique aux besoins, limitant cette dernière à mesure que la température extérieure est plus proche de 0°C. Cela permet ainsi d'effectuer des économies d'énergie électrique et donc d'améliorer l'autonomie des batteries notamment pour un véhicule électrique ou hybride.

Le procédé de contrôle du dispositif de gestion thermique 1 peut également comporter une étape supplémentaire dans laquelle, lorsque le flux d'air interne 200 a atteint sa température de confort, la puissance électrique envoyée au dispositif de chauffage électrique 60 est réduite et la vitesse de rotation du compresseur 3 est maintenue ou augmentée de sorte à maintenir le flux d'air interne 200 au niveau de sa température de confort.

Cette troisième étape permet d'utiliser moins d'énergie électrique au niveau du dispositif de chauffage électrique et d'utiliser le circuit de fluide réfrigérant A moins énergivore.

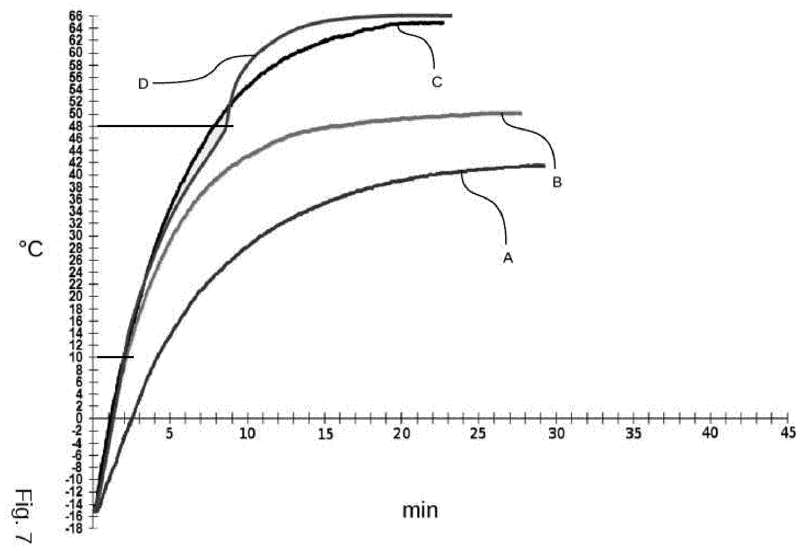

La figure 7 montre un diagramme de l'évolution de la température en °C du flux d'air interne 200 en fonction du temps en minutes selon différents procédés de contrôle du dispositif de gestion thermique 1. La température extérieure de l'air est ici de -18°C. Le dispositif de gestion thermique 1 utilisé dans l'exemple de cette figure 7 est une pompe à chaleur indirecte comportant un dispositif de chauffage électrique 60 chauffant le fluide caloporteur comme décrit dans la deuxième variante du deuxième mode de réalisation (voir figures 3 et 6).

Sur ce diagramme de la figure 7, la courbe A montre l'évolution de la température du flux d'air interne 200 pour un procédé dans lequel uniquement la pompe à chaleur est utilisée sans que le dispositif de chauffage électrique 60 ne soit utilisé. Ainsi, seuls le compresseur 3 et la pompe 53 sont en fonctionnement. Cette courbe A présente un profil logarithmique avec un palier à une température du flux d'air interne 200 de l'ordre de 42°C.

La courbe B montre l'évolution de la température du flux d'air interne 200 pour un procédé dans lequel uniquement le dispositif de chauffage électrique 60 est utilisé à une puissance de 4kW. Ainsi, seuls le dispositif de chauffage électrique 60 et la pompe 53 sont en fonctionnement. Cette courbe B a également un profil logarithmique avec une augmentation de température plus rapide que pour la courbe A illustrée par une pente plus forte, et avec un palier à une température du flux d'air interne 200 de l'ordre de 50°C, supérieur au palier de la courbe A.

La courbe C montre quant à elle l'évolution de la température du flux d'air interne 200 pour un procédé selon l'invention dans lequel, dans un premier temps, uniquement le dispositif de chauffage électrique 60 est utilisé à une puissance de 4kW pendant une durée de 2 minutes. Durant ces 2 minutes la pente de la courbe C montrant la vitesse de l'augmentation de température est identique à celle de la courbe B. Dans un deuxième temps, à l'issue de ces 2 minutes, la pompe à chaleur est mise en route par démarrage du compresseur 3. La courbe C montre alors une pente encore plus importante que celle de la courbe B, indiquant une montée en température plus rapide avant d'atteindre un palier à une température de l'ordre de 65°C, bien supérieur à celui des courbes A ou B.

La courbe D montre également l'évolution de la température du flux d'air interne 200 pour un procédé selon l'invention dans lequel, dans un premier temps, uniquement le dispositif de chauffage électrique 60 est utilisé à une puissance de 5kW jusqu'à atteindre une température cible du flux d'air interne de 48°C. Durant les 2 premières minutes la pente de la courbe D montrant la vitesse de l'augmentation de température est identique à celle des courbes B et C. Jusqu'à 4 minutes, la pente de la courbe D reste identique à celle de la courbe C. La pente de la courbe D est ensuite inférieure à celle de la courbe C tout en restant supérieure à celle de la courbe B, jusqu'à ce que le flux d'air interne 200 atteigne une température de 48°C. Dans un deuxième temps, lorsque que le flux d'air interne 200 est à 48°C, la pompe à chaleur est mise en route par démarrage du compresseur 3. La courbe D montre alors une pente encore plus importante que celle de la courbe C, indiquant une montée en température plus rapide avant d'atteindre un palier à une température de l'ordre de 66°C, bien supérieur à celui des courbes A ou B. La courbe D atteint son palier avant la courbe C indiquant un chauffage plus rapide.

Ainsi, on voit bien que le procédé de gestion selon l'invention permet une montée en température plus rapide tout ayant un coefficient de performance élevé lors d'un démarrage à froid. Cela entraîne un meilleur confort pour le ou les utilisateurs au sein de l'habitacle.

## Revendications

1. Procédé de contrôle d'un dispositif de gestion thermique (1) d'un véhicule automobile, ledit dispositif de gestion thermique (1) comportant un circuit de fluide réfrigérant dans lequel est destiné à circuler un premier fluide caloporteur et configuré pour fonctionner dans un mode pompe à chaleur, ledit circuit de fluide réfrigérant comportant dans le sens de circulation du fluide réfrigérant en mode pompe à chaleur :
a. - un compresseur (3),
b. - un premier échangeur de chaleur (5) destiné à échanger de l'énergie calorifique directement ou indirectement avec un flux d'air interne (200),
c. - un dispositif de détente (7),
d. - un deuxième échangeur de chaleur (9) destiné à être traversé par un flux d'air externe (100),
e. ledit dispositif de gestion thermique (1) comportant en outre un dispositif de chauffage électrique (60) destiné à réchauffer directement ou indirectement le flux d'air interne (200),
f. ledit procédé de contrôle comportant lors d'un démarrage du dispositif de gestion thermique (1) à froid les étapes suivantes :
i. - chauffage direct ou indirect du flux d'air interne (200) uniquement par le dispositif de chauffage électrique (60) jusqu'à ce que ledit flux d'air interne (200) atteigne une température cible inférieure à une température de confort déterminée par rapport à une demande d'un utilisateur, et/ou jusqu'à l'écoulement d'une minuterie prédéterminée,
ii. - lorsque le flux d'air interne (200) a atteint sa température cible et/ou que la minuterie est écoulée, mise en route du compresseur (3) afin que le circuit de fluide réfrigérant prélève de l'énergie calorifique au niveau du flux d'air externe (100) au niveau du deuxième échangeur de chaleur (9) et relâche ladite énergie calorifique au niveau du premier échangeur de chaleur (5) de sorte que le flux d'air interne (200) atteigne la température de confort.

2. Procédé de contrôle d'un dispositif de gestion thermique (1) selon la revendication précédente, **caractérisé en ce que** lorsque le flux d'air interne (200) a atteint sa température de confort, la puissance électrique envoyée au dispositif de chauffage électrique (60) est réduite et la vitesse de rotation du compresseur (3) est maintenue ou augmentée de sorte à maintenir le flux d'air interne (200) au niveau de sa température de confort.

3. Procédé de contrôle d'un dispositif de gestion thermique (1) selon l'une quelconque des revendications précédentes, **caractérisé en ce que** la température cible à atteindre du flux d'air interne (200) est inférieure 10°C à 30°C à la température de confort.

4. Procédé de contrôle d'un dispositif de gestion thermique (1) selon l'une quelconque des revendications précédentes, **caractérisé en ce que** la minuterie est comprise entre 1 et 3 minutes, de préférence 2 minutes.

5. Procédé de contrôle d'un dispositif de gestion thermique (1) selon l'une quelconque des revendications 1 à 4, **caractérisé en ce que** pour une température extérieure inférieure à -20°C, la puissance électrique envoyée au dispositif de chauffage électrique (60) lors de la première étape de chauffage direct ou indirect du flux d'air interne (200) uniquement par ledit dispositif de chauffage électrique (60) est supérieure à 5 kW.

6. Procédé de contrôle d'un dispositif de gestion thermique selon l'une quelconque des revendications 1 à 4, **caractérisé en ce que** pour une température extérieure comprise entre -20°C et -10°C, la puissance électrique envoyée au dispositif de chauffage électrique (60), lors de la première étape de chauffage direct ou indirect du flux d'air interne (200) uniquement par ledit dispositif de chauffage électrique (60), est comprise entre 5 et 3 kW.

7. Procédé de contrôle d'un dispositif de gestion thermique selon l'une quelconque des revendications 1 à 4, **caractérisé en ce que** pour une température extérieure comprise entre -10°C et 0°C, la puissance électrique envoyée au dispositif de chauffage électrique (60), lors de la première étape de chauffage direct ou indirect du flux d'air interne (200) uniquement par ledit dispositif de chauffage électrique (60), est comprise entre 3 et 1 kW.

8. Procédé de contrôle d'un dispositif de gestion thermique selon l'une quelconque des revendications 1 à 4, **caractérisé en ce que** pour une température extérieure supérieure à 0°C, la puissance électrique envoyée au dispositif de chauffage électrique (60), lors de la première étape de chauffage direct ou indirect du flux d'air interne (200) uniquement par le dispositif de chauffage électrique (60), est inférieure à 1 kW.

## Patentansprüche

1. Verfahren zur Steuerung einer Wärmemanagementvorrichtung (1) eines Kraftfahrzeugs, wobei die Wärmemanagementvorrichtung (1) einen Kältemittelkreislauf aufweist, in welchem ein erstes Wärmeträgerfluid zu zirkulieren bestimmt ist und welcher dafür ausgelegt ist, in einem Wärmepumpenmodus zu arbeiten, wobei der Kältemittelkreislauf in der Strömungsrichtung des Kältemittels im Wärmepumpenmodus aufweist:
a. - einen Kompressor (3),
b. - einen ersten Wärmetauscher (5), der dazu bestimmt ist, Wärmeenergie direkt oder indirekt mit einem Innenluftstrom (200) auszutauschen,
c. - eine Expansionsvorrichtung (7),
d. - einen zweiten Wärmetauscher (9), der dazu bestimmt ist, von einem Außenluftstrom (100) durchquert zu werden,
e. wobei die Wärmemanagementvorrichtung (1) außerdem eine elektrische Heizvorrichtung (60) aufweist, die dazu bestimmt ist, den Innenluftstrom (200) direkt oder indirekt zu erwärmen,
f. wobei das Steuerungsverfahren bei einem Kaltstart der Wärmemanagementvorrichtung (1) die folgenden Schritte aufweist:
i. - direkte oder indirekte Erwärmung des Innenluftstroms (200) ausschließlich durch die elektrische Heizvorrichtung (60), bis der Innenluftstrom (200) eine Zieltemperatur erreicht, die niedriger als eine in Bezug auf eine Anforderung eines Benutzers bestimmte Komforttemperatur ist, und/oder bis zum Ablauf eines bestimmten Timers,
ii. - wenn der Innenluftstrom (200) seine Zieltemperatur erreicht hat und/oder der Timer abgelaufen ist, Ingangsetzung des Kompressors (3), damit der Kältemittelkreislauf Wärmeenergie am Außenluftstrom (100) am zweiten Wärmetauscher (9) entnimmt und diese Wärmeenergie am ersten Wärmetauscher (5) abgibt, so dass der Innenluftstrom (200) die Komforttemperatur erreicht.

2. Verfahren zur Steuerung einer Wärmemanagementvorrichtung (1) nach dem vorhergehenden Anspruch, **dadurch gekennzeichnet, dass**, wenn der Innenluftstrom (200) seine Komforttemperatur erreicht hat, die der elektrischen Heizvorrichtung (60) zugeführte elektrische Leistung verringert wird und die Drehzahl des Kompressors (3) beibehalten oder so erhöht wird, dass der Innenluftstrom (200) auf seiner Komforttemperatur gehalten wird.

3. Verfahren zur Steuerung einer Wärmemanagementvorrichtung (1) nach einem der vorhergehenden Ansprüche, **dadurch gekennzeichnet, dass** die zu erreichende Zieltemperatur des Innenluftstroms (200) um 10 °C bis 30 °C niedriger als die Komforttemperatur ist.

4. Verfahren zur Steuerung einer Wärmemanagementvorrichtung (1) nach einem der vorhergehenden Ansprüche, **dadurch gekennzeichnet, dass** die Laufzeit des Timers zwischen 1 und 3 Minuten beträgt, vorzugsweise 2 Minuten.

5. Verfahren zur Steuerung einer Wärmemanagementvorrichtung (1) nach einem der Ansprüche 1 bis 4, **dadurch gekennzeichnet, dass** für eine Außentemperatur, die niedriger als -20 °C ist, die elektrische Leistung, die der elektrischen Heizvorrichtung (60) im ersten Schritt der direkten oder indirekten Erwärmung des Innenluftstroms (200) ausschließlich durch die elektrische Heizvorrichtung (60) zugeführt wird, größer als 5 kW ist.

6. Verfahren zur Steuerung einer Wärmemanagementvorrichtung nach einem der Ansprüche 1 bis 4, **dadurch gekennzeichnet, dass** für eine Außentemperatur zwischen -20 °C und -10 °C die elektrische Leistung, die der elektrischen Heizvorrichtung (60) im ersten Schritt der direkten oder indirekten Erwärmung des Innenluftstroms (200) ausschließlich durch die elektrische Heizvorrichtung (60) zugeführt wird, zwischen 5 und 3 kW beträgt.

7. Verfahren zur Steuerung einer Wärmemanagementvorrichtung nach einem der Ansprüche 1 bis 4, **dadurch gekennzeichnet, dass** für eine Außentemperatur zwischen -10 °C und 0 °C die elektrische Leistung, die der elektrischen Heizvorrichtung (60) im ersten Schritt der direkten oder indirekten Erwärmung des Innenluftstroms (200) ausschließlich durch die elektrische Heizvorrichtung (60) zugeführt wird, zwischen 3 und 1 kW beträgt.

8. Verfahren zur Steuerung einer Wärmemanagementvorrichtung nach einem der Ansprüche 1 bis 4, **dadurch gekennzeichnet, dass** für eine Außentemperatur, die höher als 0 °C ist, die elektrische Leistung, die der elektrischen Heizvorrichtung (60) im ersten Schritt der direkten oder indirekten Erwärmung des Innenluftstroms (200) ausschließlich durch die elektrische Heizvorrichtung (60) zugeführt wird, kleiner als 1 kW ist.

## Claims

1. Method for controlling a thermal management device (1) of a motor vehicle, said thermal management device (1) having a refrigerant fluid circuit in which a first heat transfer fluid is intended to circulate and being configured to operate in a heat pump mode, said refrigerant fluid circuit having, in the direction of circulation of the refrigerant fluid in heat pump mode:
a. - a compressor (3),
b. - a first heat exchanger (5) intended to exchange heat energy directly or indirectly with an internal air flow (200),
c. - an expansion device (7),
d. - a second heat exchanger (9) intended to have an external air flow (100) passing through it,
e. said thermal management device (1) also having an electric heating device (60) intended to directly or indirectly heat the internal air flow (200),
f. said control method involving, during a cold start of the thermal management device (1), the following steps:
i. - direct or indirect heating of the internal air flow (200) only by the electric heating device (60) until said internal air flow (200) reaches a target temperature below a comfort temperature determined in relation to a request from a user, and/or until the expiration of a predetermined timer,
ii. - when the internal air flow (200) has reached its target temperature and/or the timer has expired, starting up of the compressor (3) so that the refrigerant fluid circuit draws off heat energy from the external air flow (100) at the second heat exchanger (9) and releases said heat energy at the first heat exchanger (5) so that the internal air flow (200) reaches the comfort temperature.

2. Method for controlling a thermal management device (1) according to the preceding claim, **characterized in that** when the internal air flow (200) has reached its comfort temperature, the electrical power sent to the electric heating device (60) is reduced and the rotational speed of the compressor (3) is maintained or increased so as to keep the internal air flow (200) at its comfort temperature.

3. Method for controlling a thermal management device (1) according to either one of the preceding claims, **characterized in that** the target temperature to be reached of the internal air flow (200) is 10°C to 30°C less than the comfort temperature.

4. Method for controlling a thermal management device (1) according to any one of the preceding claims, **characterized in that** the timer is between 1 and 3 minutes, preferably 2 minutes.

5. Method for controlling a thermal management device (1) according to any one of Claims 1 to 4, **characterized in that**, for an outside temperature below -20°C, the electrical power sent to the electric heating device (60) during the first step of direct or indirect heating of the internal air flow (200) only by said electric heating device (60) is greater than 5 kW.

6. Method for controlling a thermal management device according to any one of Claims 1 to 4, **characterized in that**, for an outside temperature of between -20°C and - 10°C, the electrical power sent to the electric heating device (60), during the first step of direct or indirect heating of the internal air flow (200) only by said electric heating device (60), is between 5 and 3 kW.

7. Method for controlling a thermal management device according to any one of Claims 1 to 4, **characterized in that**, for an outside temperature of between -10°C and 0°C, the electrical power sent to the electric heating device (60), during the first step of direct or indirect heating of the internal air flow (200) only by said electric heating device (60), is between 3 and 1 kW.

8. Method for controlling a thermal management device according to any one of Claims 1 to 4, **characterized in that**, for an outside temperature above 0°C, the electrical power sent to the electric heating device (60), during the first step of direct or indirect heating of the internal air flow (200) only by the electric heating device (60), is less than 1 kW.
